# EUROPEAN PATENT APPLICATION

(11) **EP 2 744 098 A2**
(43) Date of publication of application: **18.06.2014**
(21) Application number: 12818364.7
(22) Date of filing: 25.07.2012
(51) Int. Cl.: H02N 2/18

(54) **SYSTEM FOR GENERATING AND DISTRIBUTING ENERGY FROM PIEZOELECTRIC MATERIALS**

(30) Priority: 25.07.2011 CO 11092721
(71) Applicant: Treevolt Sas, Medellín (CO)
(72) Inventor: MARIN RAMIREZ, Esteban, Edificio Catalejo Medellín (CO)
(74) Representative: ABG Patentes, S.L.
(86) International application number: PCT/IB2012/053803
(87) International publication number: WO 2013/014631

(57) **Abstract**

The invention relates to a system that generates energy from piezoelectric materials, applied mainly to supplying energy in traffic systems. The invention reduces the costs associated with the implementation of the piezoelectric systems on roads or vehicle and pedestrian transit systems, since in some cases they are manufactured in modules. It is characterized in that it is a system that includes a piezoelectric material, which generates electrical energy, a transmission network for said generated energy and a device for rectifying electrical current for the regulation and subsequent transmission thereof.

## Description

### 1. Field of the invention

The invention generally relates to a system of membranes for power generation and distribution by piezoelectric materials and, more particularly it relates to power generation in roadway systems.

### 2. Background Art

Piezoelectricity is the capacity of certain crystalline materials to generate an electric charge when subject to certain applied mechanical stress, and proportionate thereof. Said behavior was discovered by Pierre and Jacques Curie in the 19^{th} century. Today said materials are used in a wide range of applications at an industrial scale. The vast majority are ceramics containing lead in their crystalline structure.

Effects such as compression or even applied mechanical stress on a piezoelectric material changes the dipole moment of its molecules, thus generating a potential difference or voltage and hence transforming mechanical energy into electric energy. The relationship between the applied stress and the potential difference created has been reported in literature as linear in nature. US patent No. 7.830.071 B2 points out that in said materials the inverse effect is also valid, i.e., that an applied potential difference may translate in a morphological change of said piezoelectric material.

Piezoelectric materials traditionally generate small voltages and thus they have commonly been used as sensors, for example as noted in US Patent 7.075.215. However, it is of great interest to create piezoelectric systems having setups capable of generating a considerable amount of energy in order to be used as a power supply.

Multiple piezoelectric material configurations for said purpose are found in the art. However, in the majority of cases these result not too efficient having low durability and which require highly complex installation processes, for example as noted in US patent 7,304,416 B2.

In the development of high scale piezoelectric power generation systems, and more particularly, in the implementation of these in roadway systems, multiple difficulties arise from a construction-technical perspective. One of them is the implementation of modular systems which require high costs and installation time given the amount of assembly elements.

Therefore, there is a latent and unsatisfied need to provide an effective solution to provide energy from piezoelectric transducers located in roadway systems.

### 3. Description of the Figures

**Figure 1** represents the membrane generation system for piezoelectric power generation.
**Figure 2** represents a detailed view of the piezoelectric membrane system.
**Figure 3** represents a view of the generated piezoelectric power transmission network and its connection to the membranes.
**Figure 4** represents a view of the membrane system for piezoelectric power generation assembled in a roadway system.
**Figure 5** represents a view of the membrane system for piezoelectric power generation assembled in a roadway system.
**Figure 6** represents a view of the flexible feature of the membrane type system.
**Figure 7** represents a view of a matrix array of a membrane embodiment.
**Figure 8** represents a view of another matrix array of another membrane embodiment.
**Figure 9** represents a view of how the membrane is located over a roadway.
**Figure 10** represents another view of how the membrane is located over a roadway.

### 4. Brief description of the invention

The present invention discloses a piezoelectric power generation and distribution system from an array of piezoelectric materials, which are essentially designed to efficiently produce energy by mechanical action applied over said material. The piezoelectric material of the present invention comprises the following:

One of the goals of the present invention is to reduce costs associated with the implementation of piezoelectric systems in roadways or vehicle and pedestrian transit systems which in some cases are manufactured in modules, such as the one disclosed in US2010/0045111, thus creating one sole carpet or several membrane-type modular carpet sections which have inside an array of connectors and conductors that transfer the electric impulses generated by any deformation of the piezoelectric material towards an electronic rectifying unit and ultimately towards a power distribution or storage system.

In contrast with prior art, the present invention discloses a piezoelectric power generation and distribution system which in preferred embodiments is comprised of a membrane modular system consisting of an array of piezoelectric materials. Said membranes have an array of conductors made of any conducting material which transfer the electric impulses generated from any mechanical action applied over the piezoelectric material, i.e., motion, torsion, pressure, or any deformation of the material that produces an electrical impulse, a characteristic effect of piezoelectric materials.

In the embodiment of the present invention which uses membranes, the manufacturing elements consist of polymers having a thermal memory effect, which contain inside an array of conducting materials for power supply, in contrast with other inventions which use spring systems and complex conductor network systems. The modular membranes of the present invention provide technical advantages upon installation and when developing a large-scale piezoelectric power generation system.

In the embodiments of the present invention, the piezoelectric material is connected to positive and negative polarity conductors which transfer the electrical impulses generated from any mechanical action applied over the piezoelectric material.

In one of the present invention's preferred embodiments, the piezoelectric material can be organized in an n x n matrix array in the shape of a modular membrane made from a flexible thermoplastic material which coats the piezoelectric materials. The membrane of the present invention possesses an array of positive and negative polarity conductors which transfer the electrical impulses generated from the mechanical action applied over the piezoelectric material, i.e., motion, torsion, pressure, or any deformation of the material that produces a stress and generates an electrical impulse towards an electronic rectifying system.

In one of the embodiments of the present invention, the piezoelectric material is disposed in an array of piezoelectric materials for power generation and distribution comprising: (i) a matrix array of piezoelectric materials on a flexible modular membrane. Said array can be made of several layers of thermoplastic polymeric material: (ii) a transmission network of piezoelectric power generated in each matrix array, wherein said network comprises an arrangement of conducting materials functionally connected to each array in both negative and positive polarities in parallel; and (iii) at least one electric current rectifying device for piezoelectric power regulation and transmission generated by said piezoelectric materials.

The present invention may vary depending on the method used upon implementation thereof in roadway construction systems in both concrete and asphalt roads.

Additional objectives and advantages of the present invention shall be more evident in the detailed description below.

### 5. Detailed description of the invention

The present invention discloses a piezoelectric power generation and distribution system from piezoelectric materials, which are essentially designed to efficiently produce energy by mechanical action applied over said material.

The array of piezoelectric materials are manufactured in the shape of a membrane having positive and negative polarity conductors which transfer the electrical impulses generated from the mechanical action applied over the piezoelectric material, i.e., motion, torsion, pressure, or any deformation of the material that produces an electrical impulse towards an electronic rectifying system.

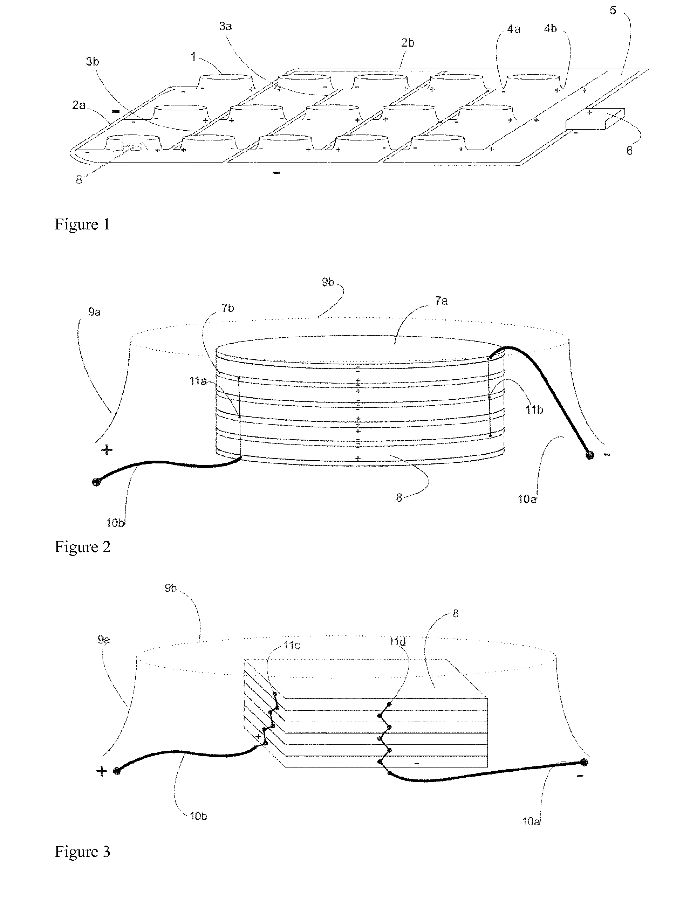

Specifically, making reference to Figure 1, the membrane (5) of the present invention is a structural element having little thickness and scarce flexural rigidity. This membrane (5) is manufactured in layers wherein said layers may be bound one over the other. In preferred embodiments, a two layer configuration is used, one top later and another bottom layer, wherein all layers are made from thermal memory effect polymers.

The modular membranes include several units comprising a cavity (1) having a roughly cylindrical shape containing a piezoelectric unit (8), as shown in Figure 2. The membrane additionally has a series of connectors laid out on the membrane connecting the piezoelectric units (8) and which allow for generation and distribution of power generated from said piezoelectric units.

Figure 1 represents a superficial scheme of the array of one of the membrane embodiments of the present invention wherein the cavity (1) of the membrane (5) is shown, which contains inside a piezoelectric unit (8) and connectors (4a and 4b) (represented in Figure 2 and Figure 3).

In Figure 1, en embodiment of membrane (5) of the present invention is noted, wherein a series of connectors (4a and 4b) are shown located on the superficial layer of the membrane (5). Said connectors (4a and 4b) transport energy stemming from the piezoelectric units (8) towards the secondary connectors (3a and 3b) located in between each row of cavities (1) of both negative as well as positive polarities respectively, and from here on towards two tertiary lateral connectors (2a and 2b) in the membrane which transport the energy towards a current rectifying module (6).

The materials used in manufacturing the membrane layers are made from any natural or synthetic polymer wherein its shape may be thermally induced, such as: polymers or synthetic rubbers which correspond to any type of artificial elastomer of natural origin or of artificial origin such as styrene, butadiene, 3-butadiene, 2-methyl-1, 3-butadiene, 2-chloro-1, 3-butadiene, methyl-propene. The external layers coating the membrane (5) preferably consist of a thermal memory effect polymer, which may be deformed and later recover its initial shape, transferring electric energy generated by the deformation caused by the vehicle's weight passing over the membrane (5).

The modular membranes of the present invention facilitate installation and the elaboration of large-scale piezoelectric power generation systems. The present invention allows for the reduction of costs associated with the implementation of piezoelectric systems in roadways or pedestrian and vehicle transit systems. The membranes of the present invention may be made as a carpet or several membrane-type modular carpet sections whose interior structure consist of an array of connectors and conductors that transfer the electric impulses generated by any mechanical action applied over any section of the piezoelectric material array. The electric potential generated is conducted towards an electronic rectifying unit and ultimately towards a power distribution or storage system.

In those embodiments where the membranes of the present invention are used in asphalt or concrete floors, the setup for power generation is carried out when the membranes are laid out at the same time the asphalt or concrete materials are placed, i.e., during the construction phase of the roadway. The piezoelectric material membranes of the present invention provide advantages in speed and ease of installation due to modularity during the road construction phase and setting of the piezoelectric modules on the roadway.

The membrane of the present invention allows including a greater number of piezoelectric units per area/surface unit, which assures a greater percentage of activation thereof during a vehicle transit event on a road once installed, due to the contact area between the piezoelectric material and the vehicles on the road. Because the present invention allows the installation of a greater number of piezoelectric membranes on the road, this facilitates and reduces costs when capturing energy and also allows obtaining information on activity of the roadway system. Therefore, information on precise data regarding weight, velocity and other dynamic measurements can be obtained of vehicles on the road, and moreover, this data being obtained from the voltage generation of each piezoelectric material.

Membrane (5) size is given by the number of cavities (1) which correspond to an n x n matrix array wherein n varies according to road size or the area to be installed for power generation. The distance between each cavity (1) may vary depending on the power generation need (the more cavities, the more power generation capacity per unit of area shall the system have), given it will directly depend on the road area, road length, geography of the site where the system will be installed, road installation time and weather conditions during road construction.

Figure 2 and 3 show in detail the piezoelectric (8) unit located inside the cavity (1) of the membrane (5), wherein the distance from the base (9a) of the cavity (1) until its exterior face (9b) may vary according to number and size of piezoelectric materials in the piezoelectric unit (8) located inside the embossing. All of the embedded materials in the membrane are preferably coated with a nanocoating which water seals all surfaces thus protecting the material from any event caused by humidity or water. The number and size of the piezoelectric materials (8) will depend on the type of application within the project settings of the roadway infrastructure.

As mentioned before, the piezoelectric materials may be made of layers depending on their use and application. Amongst the different embodiments of the present invention, the piezoelectric materials may be comprised of crystals of a certain size which may be about 1 square cm when the piezoelectric material is square, with a thickness of about 2 mm and substructure of multiple micro layers. In preferred embodiments, the micro layers may be 500 or more. These piezoelectric materials may generate an electric potential which may range between 0.2 volts up to 100 volts.

In Figures 2 and 3, at least two geometry embodiments that the piezoelectric unit (8) may have are shown. In Figure 2, the embodiment where the piezoelectric unit (8) is circular is shown and Figure 3 shows the piezoelectric unit (8) as rectangular. In other embodiments, the geometry of the piezoelectric unit (8) may be of any other shape provided two of its faces have more area than the others. In the embodiment shown in Figure 2, the negative and positive polarities of the piezoelectric unit (8) are adhered by weld spots to a conductor which may copper, gold, aluminum, or any other conducting material (7a) and (7b). The connection points between the piezoelectric units (8) are made by weld spots to the filaments of any conducting material for the positive face (11a) and (11b) for the negative face. The connectors transfer the current towards other connectors (10a) and (10b) which end up with the connection of the connector network (4a) and (4b). Regarding Figure 3, the polarities of the piezoelectric unit (8) are adhered through weld spots to a filament of any conducting material for the positive polarity (11c) and for the negative polarity (11d) which end up with the connection of a connector network (4a) and (4b) for positive and negative current.

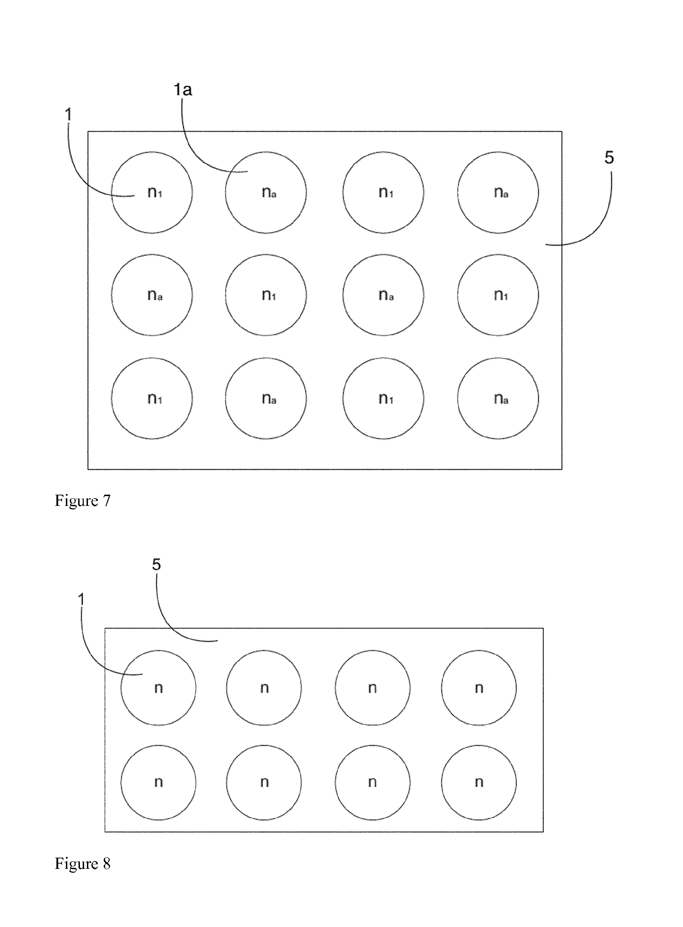

For roadway systems made for heavyweight transit, the layers of piezoelectric materials are reduced, and in contrast, for roadway systems made for lightweight vehicles, the number of layers of piezoelectric materials is increased. In the case of mixed traffic roadways (both heavyweight and lightweight vehicles), the arrays of layers of piezoelectric materials may be intercalated between greater and lesser sizes in the cavity matrix (1) as nₐx n₁ (see Figure 7) wherein n₁ cavities (1) correspond to all piezoelectric arrays designed for heavyweight vehicles and wherein nₐ cavities (1a) correspond to all piezoelectric arrays for lightweight vehicles.

Figure 8 represents the scheme in cases where roadway transit is generally homogenous, wherein the geometry of the n cavity (1) is used throughout the membrane in like number of embedded piezoelectric materials.

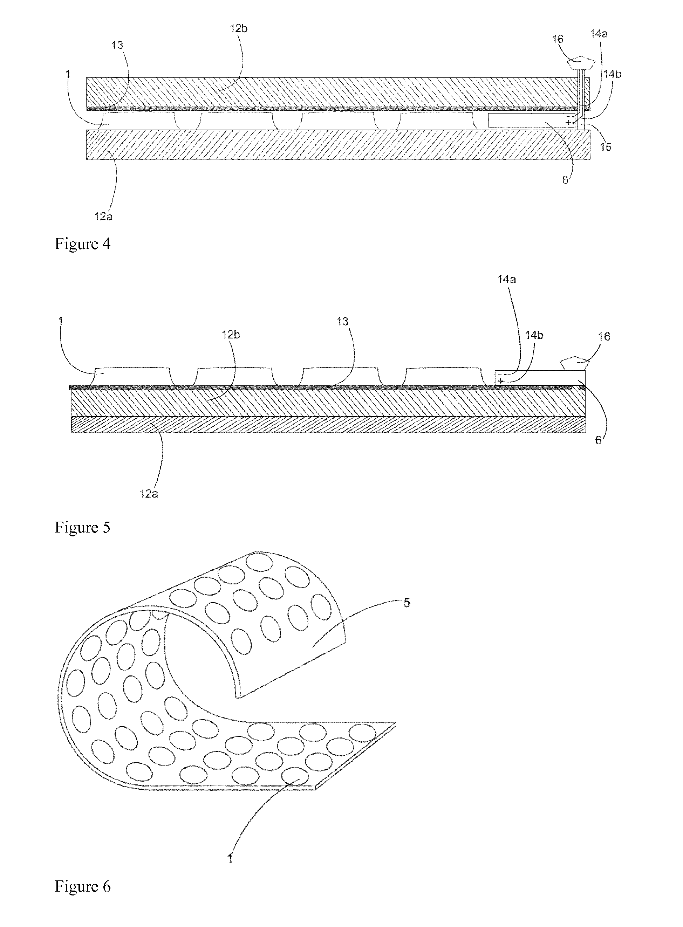

Figure 4 and 5 show embodiments of membrane (5) layout in a roadway infrastructure system for use in public or private roadways, respectively. Figure 4 shows how the membrane is incorporated for roadway infrastructure systems based on concrete, asphalt or other materials for road construction, wherein the homogenous solid base (12a) is comprised of any construction material used in roadway infrastructure. Under layer (12b) is a third layer (13) made of a plastic or thermoplastic polymer whose function is to provide stability to the membrane (5) at the moment each vehicle passes distributing the weight in a more ample area over each cavity (1). Layer (13) also protects the voltage rectifying module (6) and its positive and negative connecting components (14a and 14b). The connectors (14a and 14b) are led to the outside of the road through an opening covered by conic PVC material (15) towards a power collection or transmission system.

Figure 6 shows a system where the membrane's (5) flexibility is shown for purposes of versatility upon being transported and installed. Likewise, the membrane-type system has a competitive advantage compared to the other generation systems, which is large-scale manufacture and production in little time given this membrane is made up of layers and assembled together with the piezoelectric materials, the current rectifying unit and the connectors transmitting the currents and signals generated.

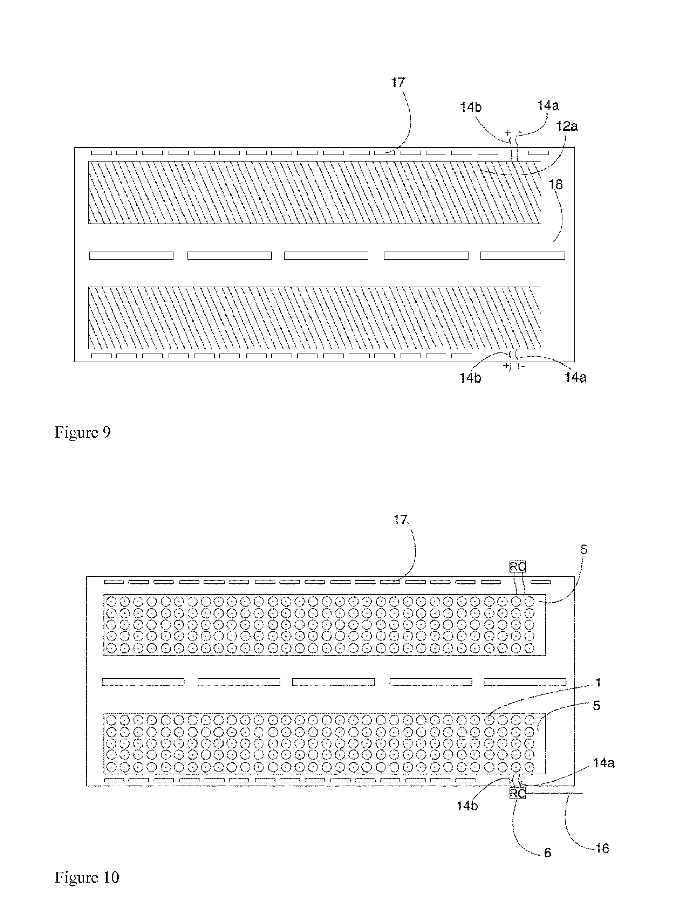

Figures 9 and 10 show a scheme of the installation process of the membrane systems of the present invention infrastructure based on asphalt, concrete or any other material used in roadway systems. Figure 9 shows the area considered to be object of application of the piezoelectric material. Firstly, the asphaltic layer must be removed at the granular base shown as (12a), in order to then place the membrane (5) as a carpet over said area. In those cases where the road (18) is already made, the membrane (5) must be installed over the granular base (the granular base is said floor which can be sand mixed with rocks, covered by a flexible plastic material), in order to then place the membrane (5) as a carpet. In case there is ongoing construction, there would be no need for preparing the road or any material cutting, but instead simply the membranes would be placed between the construction layers of the road.

Figure 10 shows the placement of the membranes along the area selected on the road. Upon preparing the road, connectors (14a) and (14b) must be installed previously in such a manner the polarities are ready to be connected to the rectifying system at both sides of the road. Once the membrane is installed (5) as a carpet, the connection of connector points are made at the positive and negative poles of connectors (14a) and (14b) with the rectifying unit (6) which can go embedded or on the asphalt, concrete or any other element used in the roadway infrastructure depending on the type of application desired.

Once the membrane (5) carpet is placed on the road, it is possible according to the road construction operator's criteria, to dump epoxy highly flexible material over the thermoplastic (13) material layer located over the membrane (5), in order to assure weight homogeneity over each one of the piezoelectric units (8), and after this process carryout the asphalt or concrete process (12b) in order to entirely cover the membrane (5).

The materials used to manufacture the connectors which transfer power generated by the positive and negative polarities of the piezoelectric materials and which are embedded within the membrane are: silver, copper, gold, aluminum, nickel, zinc, brass, iron, phosphorous, bronze, tin, lead, nickel aluminum bronze, steel, ionic liquid/electrolytes, cuprate-perovskite and ceramic derivatives, amongst others.

The materials used as crystals or piezoelectric ceramics may be comprised of the following materials: zirconate, barium titanate, lead titanate, magnesium, niobate, ceramic derivatives, lead zinc-titanate, magnesium and lead niobate, lead-lantanate-titanate, crystal lead titanate, magnesium, unicrystalline nibate, lead titanate, zinc niobate, barium titanate, strontium, barium niobate, lithium niobate, lithium tantalite, barium niobate, lead, polyvinylidene fluoride, polyamides, nano tubes, synthetic or carbon-based natural structure sheets or bridges, zinc oxide sheets or bridges.

The materials used in roadway construction processes with which it is possible to perform the efficient use of the present invention are: anti-graffiti bridge bearing coating lubricant, silicone sealants, structural steel bridge type coatings, crack sealants, support elastomers, expansion lubricating adhesive, lead protecting paint, water-sealing system, surface finishing system, sound and stain barrier-type wood, asphalt carpet, asphaltic emulsion, asphalt agent, roadway additives, cement and mixed cement certified sources, fly ash certified sources, steel mill sludge, concrete additives, slag sources, concrete anchors, poured concrete, concrete admixtures, concrete additives, concrete, epoxy materials, demolding agents, hardening materials for repairs, special superficial finishing system, humidity sealant polymeric sets, adhesives, galvanized pole repair paint, and any other material approved by the department of transportation (DOT) of the United States.

The systems for electric potential rectification generated by the piezoelectric materials may be comprised of any electronic element or system which allows the rectification of high voltages and large currents in order to rectify an AC or DC current, such as voltage rectifiers commonly used in the art. In preferred embodiments, an electronic circuit may be used which contains accumulating capacitors of electric potential generated by the piezoelectric materials, a diode array which rectifies the signals generated, and bobbins or inductors in order to accumulate the electric potential generated.

The power generation system of the present invention is capable of feeding several types of systems in the power generation and distribution environment, namely:
1. Feeding power into street lighting systems;
2. Feeding power into street security systems such as detection cameras, speed detection cameras, motion cameras, light patterns in general, infrared cameras, heat vision cameras, night vision cameras, etc.;
3. Feeding power into sensors, amongst any type of sensor of a multi-physical event;
4. Feeding power infrastructure at sites near the roadway infrastructure project;
5. Feeding AC or DC power generators; and
6. Transmission of power generated by vehicle transit towards the power transmission infrastructure created near the vehicle transit roadways.

The use of piezoelectric materials of the present invention allows offering applications derived from power generation, namely: weight sensing in roadway infrastructure systems, volume sensing in roadway infrastructure, temperature sensing in roadway infrastructure, pH sensing in roadway infrastructure, and speed sensing in roadway infrastructure.

Likewise, smart applications may equally be derived through power generation of the piezoelectric materials of the present invention, namely: systems and advanced methods for the detection of roadway disruptive events (sector or zone destruction of roadway infrastructure), accident prediction methods and systems caused by motor vehicles, speed limit prevention methods and systems, roadway surface signaling systems and methods, wifi, Bluetooth, infrared, RFID, GPS, GPRS communication systems amongst other options for data transmission in real time.

### EXAMPLE:

The instant invention is placed on a road having only one lane (3.5 meters wide) wherein the piezoelectric modular membranes are embedded along one kilometer. Each modular membrane is constructed 3.3 meters wide and 15 meters long in size, reaching an average 67 complete membrane units with 67 current-rectifying units, a distribution and storage system of electric power generated by the 67 membrane units.

The membranes are comprised of a total of 12,000 piezoelectric crystals over each kilometer installed, each crystal being 1 square cm by 2 mm thick in size, and each has for the most part 600 micro layers each being 65 µm thick, wherein each has a different polarity both positive and negative. The polarities of the crystals are intercalated, one positive and one negative. The energy generated during motion of a mass averaging 300 kg to 50 tons on each crystal may range between 0.0005 and 1.5 watts during 0.5 seconds on average, respectively. The voltage that can be rectified per crystal may range between 0.2 and 80 volts, power losses caused by the connection of each piezoelectric material with each connector may range between 5 to 15% of the total power generated by the piezoelectric material, losses generated when interconnecting the rectification system to a standard power grid may range between 7 to 15%. In total, power losses of the system may range between 5 and 30% over the entire system. Each piezoelectric element together with its respective connectors must be coated with an isolating material layer which can be made from nano structures all the way through microstructures described above.

It must be understood that the present invention is not found limited by the embodiments described and illustrated, and as will be evident for a person skilled in the art, variations and possible modifications exist which do not apart themselves from the scope and spirit of the invention, which is only found defined by the following claims.

## Claims

1. A power generation and distribution system using piezoelectric materials, characterized for comprising:
a. a plurality of piezoelectric units;
b. a polymeric material which coats the piezoelectric units; and
c. a network which connects positive and negative terminals of the piezoelectric units.

2. The system of Claim 1, **characterized in that** it additionally has a rectification system connected to the network which corrects the electric potential generated between the positive and negative terminals of the piezoelectric units.

3. The system of Claim 1, characterized because the piezoelectric material and the conducting materials are coated with a sealant.

4. The system of Claim 1, characterized because the system is modular.

5. The system of Claim 1, characterized because the polymeric material is comprised of multiple layers.

6. The system of Claim 1, characterized because one of the layers is comprised by a polymer having a thermally induced memory effect.

7. The system of Claim 1, characterized because it is implemented in road constructions made from materials selected from asphalt and concrete.

8. The system of Claim 1, characterized because the membrane is installed between the granular base and the superficial layer of the road.

9. The system of Claim 1, characterized because the piezoelectric material is selected from the group comprising: zirconate, barium titanate, lead titanate, magnesium, niobate, ceramic derivatives, lead zinc-titanate, magnesium and lead niobate, lead-lantanate-titanate, crystal lead titanate, magnesium, unicrystalline nibate, lead titanate, zinc niobate, barium titanate, strontium, barium niobate, lithium niobate, lithium tantalite, barium niobate, lead, polyvinylidene fluoride, and polyamides.

10. The system of Claim 1, characterized because the electric potential generated by the piezoelectric material is used as a power source in systems comprising: weight and speed sensors, radars, GPS or GPRS transmitters, advertising elements, roadway voice and data transmission, roadway signaling, road lighting, alarm systems, emergency systems, air quality monitoring stations, electric vehicle power chargers, and home appliance chargers.
